# EUROPEAN PATENT APPLICATION

(11) **EP 3 461 370 A1**
(43) Date of publication of application: **03.04.2019**
(21) Application number: 17306299.3
(22) Date of filing: 29.09.2017
(51) Int. Cl.: A47B 77/02, A47B 96/18, A47B 77/08, C04B 35/195, F24C 15/10, A47B 96/20

(54) **PROFESSIONAL KITCHEN STOVE**

(71) Applicant: Electrolux Professionnel, 60300 Senlis (FR)
(72) Inventor: BONNOTTE, Olivier, 26240 Saint-Vallier (FR)
(74) Representative: Electrolux Group Patents

(57) **Abstract**

The invention relates a kitchen stove (1) comprising a casing (2) and a stovetop (10) for cooking/heating food. The stovetop (10) comprises a countertop (12) having one or more cooking elements (16a, 16b, 16c) for cooking/heating food. The countertop (12) comprises a sintered ceramic plate comprising a mixture of Aluminun, Silicon and Calcium oxides and at least one lateral side (2a, 2b, 2c, 2d) of the casing (2) has an outer surface comprising a sintered ceramic plate comprising a mixture of Aluminun, Silicon and Calcium oxides.

## Description

The present invention concerns the field of cooking/heating food.

In particular, the invention concerns a kitchen appliance for cooking/heating food, or kitchen stove.

Specifically, the invention relates to a professional type kitchen stove.

### BACKGROUND ART

Nowadays the use of kitchen appliances for cooking/heating food, also known as kitchen stoves, is widespread.

Kitchen stoves of known type generally comprise a casing and a top surface, or stovetop, comprising a countertop where one or more cooking elements for cooking/heating food are embedded.

Cooking elements may comprise, for example, natural gas burning elements or electrically-heated elements or induction cookers, where cooking pots and/or pans are placed thereon for cooking/heating food contained therein. Cooking elements may also comprise, for example, gas or electric griddle where the food is directly put for its cooking. Cooking elements may further comprise electric fryers or electric cookers for pasta.

Kitchen stoves of professional type are also known and are generally realized as freestanding island unit. Stovetops for professional kitchen stoves are typically rectangularly shaped and beneath the stovetop the casing preferably comprises accessories, like refrigerator units for the preservation of food, drawers for storage of cooking utensils, cabinets preferably provided with opening doors for storage of items and/or food, etc.

Said accessories are advantageously arranged at vertical sides of the casing, preferably at the front vertical side of the casing, to be easily accessible to the cook/chef.

In the same front vertical side of the kitchen stove and beneath the stovetop one or more control devices and/or display devices are also preferably arranged.

Control devices, such as dials/knobs, are used for controlling the cooking elements, typically for controlling the gas intensity in case of a natural gas burner or the cooking temperature in an electric grid or the oil temperature in a fryer, etc.

Display devices preferably give feedback information related to the cooking of the food, such as the cocking temperature, the cocking time, the heating levels of the heating elements, and/or may give information relating settings/status of the appliance, such as alarms, data and time, etc.

In known kitchen stoves, countertop where cooking element are embedded are typically made of stainless-steel or granite. Vertical sides of the casing, then, typically comprises enamelled panel. Enamelled panel may also be preferably used to cover the outside surfaces of the accessories, for example outside surfaces of the opening doors and/or of the drawers, etc.

A drawback of known professional kitchen stoves is that stainless-steel countertops have poor scratch and wear resistance that may lead to a rapid damaging, in particular when cooking pots and/or pans are moved over them and/or hot liquid falling on them (for example hot water or hot oil). Countertops are also cyclically exposed at variable temperatures, due to the presence of heat sources.

This causes aesthetic changes over time and sometimes requires reparation and/or substitution of the countertop.

Damaging of the countertop may also be caused by frequent and harsh cleaning processes generally adopted in professional kitchen stove.

The same drawbacks substantially arise in case of granite countertop.

Also, enamelled surfaces of the side panels are subjected to damaging, in particular when hot liquid falls on them or if subjected to accidental mechanical impacts (e.g. due to trolleys, which are commonly used in professional kitchens). This again causes aesthetic changes over time and sometimes requires reparation and/or substitution of the enamelled panels.

The object of the present invention is therefore to overcome the drawbacks posed by the known technique.

It is an object of the invention to provide a professional kitchen stove that maintains aesthetic features over time.

It is another object of the invention to provide a professional kitchen stove that makes it possible to simplify or even avoid maintenance and/or repairing costs.

Advantages, objects, and features of the invention will be set forth in part in the description and drawings which follow and in part will become apparent to those having ordinary skill in the art upon examination of the following or may be learned from practice of the invention.

### DISCLOSURE OF INVENTION

Applicant has found that by providing a professional kitchen stove with an outer surface comprising a sintered ceramic plate comprising a mixture of Aluminun, Silicon and Calcium oxides, it is possible to maintain aesthetic features of the professional kitchen stove over time.

The present invention relates, therefore, to a professional kitchen stove comprising a casing and a stovetop for cooking/heating food, said stovetop comprising a countertop having one or more seats apt to receive one or more cooking elements for cooking/heating of foods, wherein said countertop comprises a sintered ceramic plate comprising a mixture of Aluminun, Silicon and Calcium oxides and wherein at least one lateral side of said casing has an outer surface comprising a sintered ceramic plate comprising a mixture of Aluminun, Silicon and Calcium oxides.

Preferably, but not necessarily, the sintered ceramic plate of the countertop is of the same kind (i.e. it has the same composition, or substantially the same composition) of the sintered ceramic plate of the countertop of said at least one lateral side of said casing.

In another advantageous embodiment, the sintered ceramic plate of the countertop is of a different kind (i.e. it has a different composition) with respect to the sintered ceramic plate of the countertop of said lateral side of said casing.

In a preferred embodiment, said mixture comprises silico-aluminates, amorphous silica, crystalline silica, zircon and inorganic pigments. The content of crystalline silica is preferably below 11% in weight.

In a preferred embodiment of the invention, the countertop is totally constituted of said sintered ceramic plate.

In another preferred embodiment of the invention, the countertop is covered by said sintered ceramic plate.

In a preferred embodiment of the invention, said lateral side of the casing is totally constituted of said sintered ceramic plate.

In another preferred embodiment of the invention, said lateral side of the casing is covered by said sintered ceramic plate.

According to a preferred embodiment of the invention, the casing comprises one or more accessories.

Preferably, said one or more accessories is one or more of accessories of the group comprising: a refrigerator unit, a unit for the preservation of food, a drawer, a cabinet preferably provided with an opening door.

In a preferred embodiment of the invention, said sintered ceramic plate at least partially covers said one or more accessories.

Preferably, said sintered ceramic plate has a surface hardness comprised between 800 and 1200 HV (Vickers hardness).

Preferably, said one or more cooking elements is one or more of cooking elements of the group comprising: a natural gas burning element, an electrically-heated element, an induction cooker, a gas griddle, an electric griddle, an electric fryer, an electric cooker for pasta.

According to a preferred embodiment of the invention, the professional kitchen stove further comprises a control device arranged at said casing.

Preferably, said control device comprises at least one input device which is apt to control/set the temperature of one of said one or more cooking elements.

In a preferred embodiment of the invention, the professional kitchen stove further comprises a connecting device for connecting the countertop to the at least one lateral side.

Preferably, the connecting device comprises at least one plug which is inserted both in a hole of the countertop and a hole of the at least one lateral side.

### BRIEF DESCRIPTION OF THE DRAWINGS

Further characteristics and advantages of the present invention will be highlighted in greater detail in the following detailed description of a preferred embodiment of the invention, provided with reference to the enclosed drawings.

In particular:
- Figure 1 shows a perspective view of a professional kitchen stove according to a preferred embodiment of the invention;
- Figure 2 shows the professional kitchen stove of Figure 1 from another point of view;
- Figure 3 shows a plan view from above of the professional kitchen stove of Figure 1;
- Figure 4 shows a component of the professional kitchen stove of Figure 1 isolated from the rest;
- Figure 5 shows an exploded view of a particular of the professional kitchen stove of Figure 1.

### DETAILED DESCRIPTION OF AN EXEMPLARY EMBODIMENT OF THE INVENTION

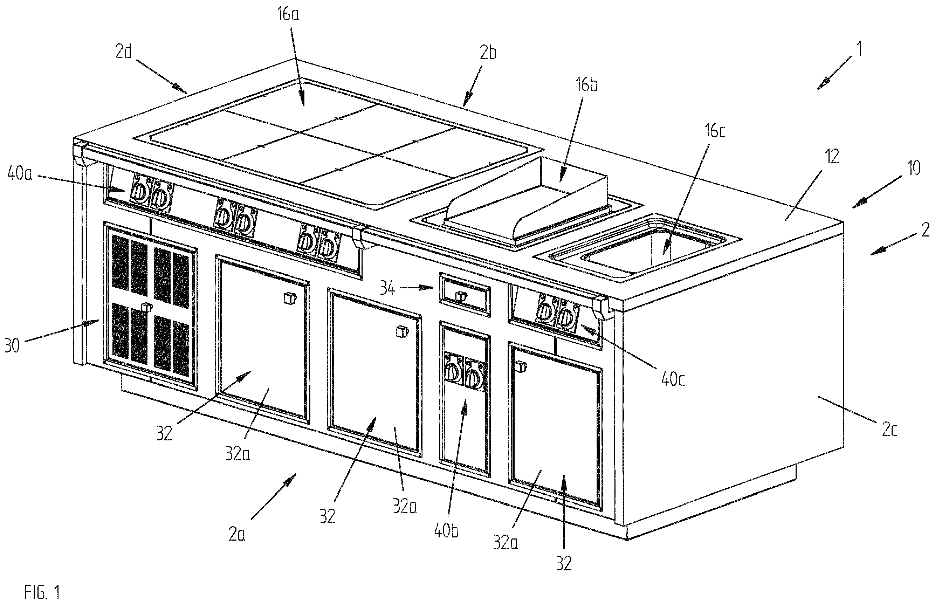

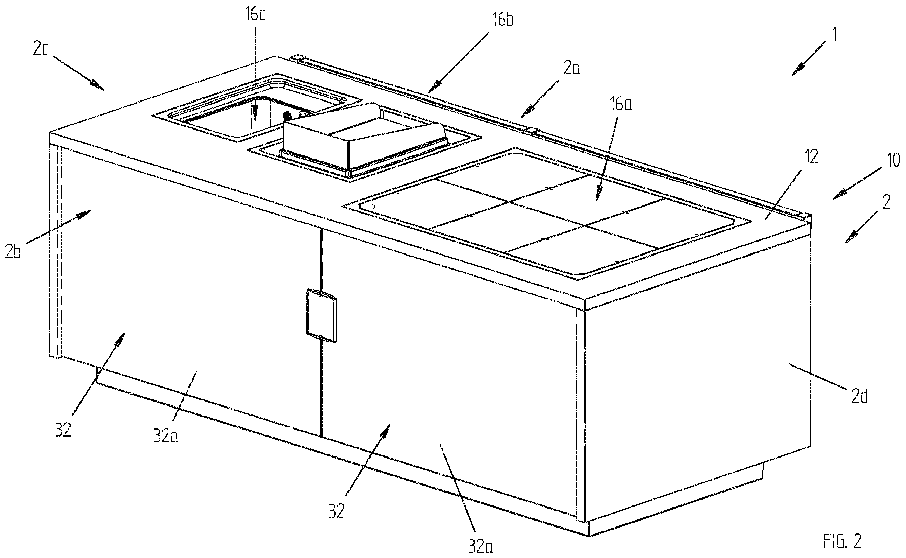

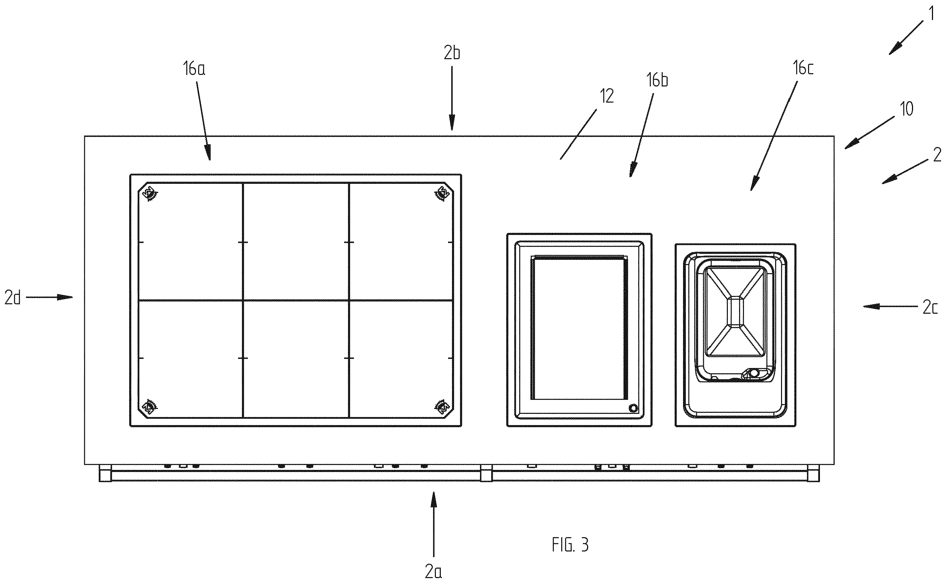

Figures 1 to 3 illustrate a professional kitchen stove 1 according to a first preferred embodiment of the invention, hereinafter simply indicated as kitchen stove.

The kitchen stove 1 is realized as a freestanding island unit, as known in the field of professional kitchen stoves.

The kitchen stove 1 preferably comprises a casing 2 and a stovetop 10 (to be understood as the top region of the stove) arranged at the top thereof.

The casing 2 preferably comprises a vertical front side wall 2a, a vertical rear side wall 2b and two vertical lateral side walls 2c, 2d.

Vertical front side wall 2a of the casing 2 refers to the side of the casing 2 that faces the cook/chef while he/she is working/cooking.

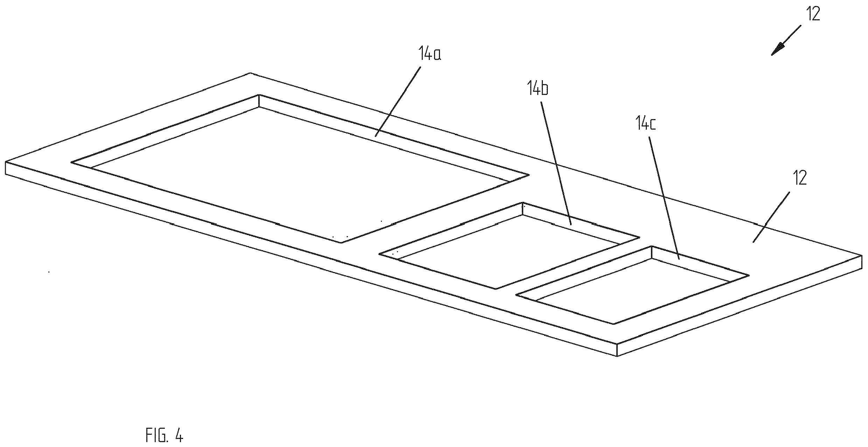

The stovetop 10 preferably comprises a countertop 12, better illustrated in Figure 4, having three seats 14a, 14b, 14c apt to receive three cooking elements 16a, 16b, 16c for cooking/heating of foods.

Countertop 12 is preferably rectangularly shaped. Nevertheless, in further preferred embodiments, countertop may have any suitable shape.

The first cooking element 16a preferably comprises a six induction cookers unit.

The second cooking element 16b preferably comprises an electric grid.

The third cooking element 16c preferably comprises a cooker for pasta, i.e. substantially a container for hot water.

The cooking elements here illustrated and described are example of cooking elements which may be foreseen in professional kitchen stoves.

Nevertheless, in further preferred embodiments according to the invention, cooking elements may be of different type, for example natural gas burning elements or electric fryers.

In the preferred embodiment illustrated and described herein, three cooking elements are preferably provided. In different embodiments, nevertheless, the number of cooking elements may be different, even just one.

The casing 2 preferably comprises a plurality of accessories, as better described below.

The casing 2 preferably comprises a technical cabinet for induction 30, cabinets 32 provided with respective opening doors 32a and a drip tray drawer 34.

Refrigerator units, cabinets or drawers are other accessories which may be comprised in the casing 2.

Nevertheless, in further preferred embodiments according to the invention, accessories may be of different type, for example hot cabinets, hot drawers, low temperature oven, etc.

In the preferred embodiment illustrated and described herein, the accessories are preferably arranged at front and rear vertical side walls 2a, 2b, while the vertical lateral side walls 2c, 2d are preferably plain.

The kitchen stove 1 further preferably comprises control knobs 40a, 40b, 40c, preferably arranged at front side wall 2a of the casing 2.

IN the example shown ion attached Figures, six control knobs 40a are preferably apt to control/set the temperature of the six induction cookers unit 16a, a seventh knob 40b is preferably apt to control/set the temperature of the electric grid 16b and, an eighth knob 40c is preferably apt to control/set the temperature of water of the cooker for pasta 16c.

In the preferred embodiment illustrated and described herein, eight control knobs are preferably provided. In different advantageous embodiments, the number of control knobs may be different, even just one.

In further preferred embodiments, then, display devices are also preferably arranged at the cabinet, preferably at the front side wall of the casing.

Display devices preferably give feedback information related to the cooking of the food, such as the cocking temperature, the cocking time, the heating levels of the heating elements, and/or may give information relating settings/status of the appliance, such as alarms, data and time, etc.

According to an aspect of the invention, the countertop 12 preferably comprises a sintered ceramic plate comprising a mixture of Aluminun, Silicon and Calcium oxides.

The ceramic plate has a surface hardness comprised between 800 and 1200 HV (Vickers Hardness).

Advantageously, the countertop 12 has a higher scratch or wear resistance and a higher impact strength compared to known professional kitchen stoves.

Damaging caused by cooking pots and/or pans which are put on it, by hot liquid falling on them, temperature variations, by frequent and harsh cleaning processes are therefore advantageously avoided.

Advantageously, the countertop maintains its aesthetic features over time. Furthermore, maintenance and/or repairing costs for restoring damaged countertop are advantageously reduced or even avoided, compared to known countertops.

In a preferred embodiment of the invention, the countertop is totally constituted of said sintered ceramic plate.

In further preferred embodiments, the sintered ceramic plate may represent a cover plate for the countertop.

According to a further aspect of the invention, at least one lateral side of said casing 2 has an outer surface comprising a sintered ceramic plate comprising a mixture of Aluminun, Silicon and Calcium oxides.

In the preferred embodiment illustrated and described herein, the vertical side walls 2a, 2b, 2c, 2d of the casing 2 comprise a sintered ceramic plate comprising a mixture of Aluminun, Silicon and Calcium oxides.

The ceramic plate has a surface hardness comprised between 800 and 1200 HV (Vickers Hardness).

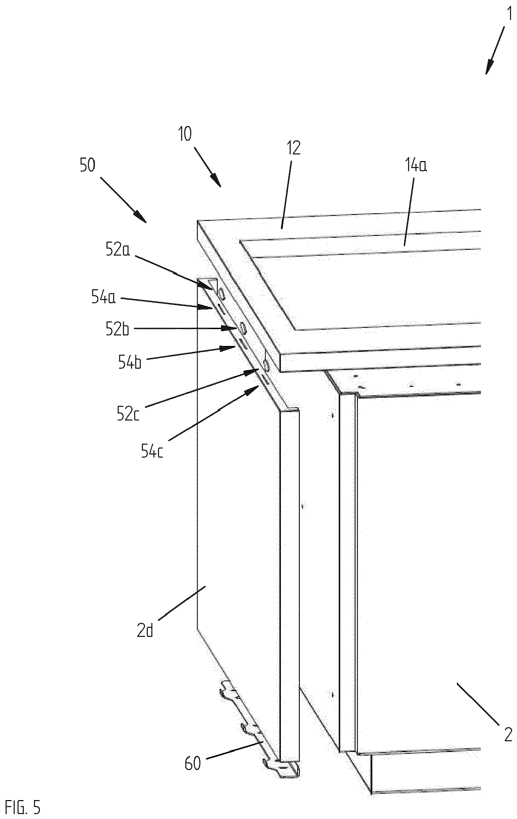

Preferably, the sintered ceramic plate represents a cover plate for the side walls 2c, 2d so that the outer surface is constituted of sintered ceramic, as illustrated for example in Figure 5.

In further preferred embodiments, the vertical lateral side walls 2c, 2d of the casing are totally constituted of said sintered ceramic plates.

In the preferred embodiment illustrated and described herein, the front and rear side walls 2a, 2b of the casing 2 comprise sintered ceramic plates.

Preferably, opening doors 32a of the cabinets 32 and outer surface of the drawer 34 comprise sintered ceramic plates.

Preferably, opening doors 32a and outer surface of the drawer 34 are totally constituted of said sintered ceramic plates.

In further preferred embodiments, the sintered ceramic plate is a cover plate for the opening doors 32a and/or for the outer surface of the drawer 34.

Advantageously, the side walls of the kitchen stove have a higher scratch or wear resistance and a higher impact strength compared to known professional kitchen stoves.

Damages caused by hot liquid falling on them, by temperature variations, by frequent and harsh cleaning processes, by accidental mechanical impacts are therefore advantageously reduced or even avoided.

Advantageously, the side walls maintain their aesthetic features over time. Furthermore, maintenance and/or repairing costs for restoring damaged side walls are advantageously reduced or even avoided, compared to known kitchen stoves.

According to a further aspect of the invention, countertop 12 is connected to the lateral side walls 2c, 2d of the casing 2, as illustrated in Figure 5.

A connecting device 50 allows the connection between the countertop 12 and the lateral side 2d by interference fit. Description of Figure 5 refers to the left side lateral wall 2d of the casing 2 but the same easily applies to the right side lateral wall 2c of the casing 2.

The connecting device 50 preferably comprises at least one plug 52a, 52b, 52c, in the preferred embodiment here illustrated three plugs 52a, 52b, 52c.

Each plug 52a, 52b, 52c is fixed at one side in a hole 54a, 54b, 54c of the lateral side 2d and at the opposite side in a hole, not visible in the Figures, of the countertop 12.

A supporting sheet 60 is preferably provided at the base of the lateral side 2d.

The supporting sheet 60 is preferably fixed to the casing 2, preferably by means of screws, and supports the lateral side 2d.

It has thus been shown that the present invention allows all the set objects to be achieved. In particular, it makes it possible to provide a professional kitchen stove which maintains aesthetic features over time.

While the present invention has been described with reference to the particular embodiment shown in the figures, it should be noted that the present invention is not limited to the specific embodiment illustrated and described herein; on the contrary, further variants of the embodiment described herein fall within the scope of the present invention, which is defined in the claims.

## Claims

1. A professional kitchen stove (1) comprising a casing (2) and a stovetop (10) for cooking/heating food, said stovetop (10) comprising a countertop (12) having one or more seats (14a, 14b, 14c) apt to receive one or more cooking elements (16a, 16b, 16c) for cooking/heating food,
**characterized in that**
said countertop (12) comprises a sintered ceramic plate comprising a mixture of Aluminun, Silicon and Calcium oxides,
**and in that**
at least one lateral side (2a, 2b, 2c, 2d) of said casing (2) has an outer surface comprising a sintered ceramic plate comprising a mixture of Aluminun, Silicon and Calcium oxides.

2. A professional kitchen stove (1) according to claim 1, **characterized in that** said countertop (12) is totally constituted of said sintered ceramic plate.

3. A professional kitchen stove (1) according to claim 1, **characterized in that** said sintered ceramic plate is a covering portion of said countertop (12).

4. A professional kitchen stove (1) according to any preceding claim, **characterized in that** said lateral side (2a, 2b, 2c, 2d) of said casing (2) is totally constituted of said sintered ceramic plate.

5. A professional kitchen stove (1) according to any claim 1 to 3, **characterized in that** said sintered ceramic plate is a covering portion of said lateral side (2a, 2b, 2c, 2d) of said casing (2).

6. A professional kitchen stove (1) according to any preceding claim, **characterized in that** said casing (2) comprises one or more accessories (30, 32, 34).

7. A professional kitchen stove (1) according to claim 6, **characterized in that** said one or more accessories (30, 32, 34) is one or more of accessories of the group comprising: a refrigerator unit (30), a unit for the preservation of food, a drawer (34), a cabinet (32) preferably provided with an opening door (32a).

8. A professional kitchen stove (1) according to claim 6 or 7, **characterized in that** said sintered ceramic plate at least partially covers said one or more accessories (30, 32, 34).

9. A professional kitchen stove (1) according to any preceding claim, **characterized in that** said sintered ceramic plate has a surface hardness comprised between 800 and 1200 HV.

10. A professional kitchen stove (1) according to any preceding claim, **characterized in that** said one or more cooking elements (16a, 16b, 16c) is one or more of cooking elements of the group comprising: a natural gas burning element, an electrically-heated element, an induction cooker (16a), a gas griddle, an electric griddle (16b,), an electric fryer, an electric cooker for pasta (16c).

11. A professional kitchen stove (1) according to any preceding claim, **characterized in that** said it further comprises a control device (40a, 40b, 40c) arranged at said casing (2).

12. A professional kitchen stove (1) according to claim 11, **characterized in that** said control device (40a, 40b, 40c) comprises at least one input device which is apt to control/set the temperature of one of said one or more cooking elements (16a, 16b, 16c).

13. A professional kitchen stove (1) according to any preceding claim, **characterized in that** it further comprises a connecting device (50) for connecting said countertop (12) to said at least one lateral side (2c, 2d).

14. A professional kitchen stove (1) according to claim 13, **characterized in that** said connecting device (50) comprises at least one plug (52a, 52b, 52c) which is inserted both in a hole of said countertop (12) and in a hole (54a, 54b, 54c) of said at least one lateral side (2c, 2d).
